# EUROPÄISCHE PATENTSCHRIFT

(11) **EP 3 869 081 B1**
(45) Veröffentlichungstag und Bekanntmachung des Hinweises auf die Patenterteilung: **04.09.2024**
(21) Anmeldenummer: 20158504.9
(22) Anmeldetag: 20.02.2020
(51) Int. Cl.: F17C 13/04, F17C 1/06

(54) **HOCHDRUCKBEHÄLTER**
HIGH PRESSURE VESSEL
RÉSERVOIR HAUTE PRESSION

(43) Veröffentlichungstag der Anmeldung: 25.08.2021
(60) Teilanmeldung: 24183320.1
(73) Patentinhaber: MAGNA Energy Storage Systems GesmbH, 8261 Sinabelkirchen (AT)
(72) Erfinder: PUNTIGAM, David, 8522 Gross St.Florian (AT); PREITLER, Andreas, 8101 Gratkorn (AT); PUCHLEITNER, Rainer, 8052 Graz (AT)
(74) Vertreter: Zangger, Bernd

(56) Entgegenhaltungen:
- JP-A- H10 332 083
- JP-A- H10 332 085
- US-A1- 2004 173 618
- US-A1- 2008 251 520
- US-A1- 2017 284 601
- US-A1- 2019 170 300

## Beschreibung

### Gebiet der Erfindung

Die vorliegende Erfindung betrifft einen Hochdruckbehälter, insbesondere zur Speicherung eines Kraftstoffs für ein Kraftfahrzeug.

### Stand der Technik

Es ist bekannt das Hochdruckbehälter, beispielsweise zum Speichern von Wasserstoff als Kraftstoff für Kraftfahrzeuge, aus einer innenliegenden Schicht, dem sogenannten "Liner", und einer Wicklung von Fasermaterial um den Liner herum aufgebaut werden können.

Zur Herstellung eines Behälters ist es bekannt, die Technologien des Blasformens und Thermoformens einzusetzen. Die Herstellung beruht dann auf der Umformung von schlauch- oder plattenförmigen Halbzeugen. Diese werden durch Unterdruck und/oder Überdruck in ihre finale Form gebracht. Beispielsweise können zwei Halbschalen erzeugt werden, die aneinander gefügt werden, um einen Behälter zu bilden.

Für den Anwendungsfall von gasdichten Linern für Typ IV Behälter, die zur Druckspeicherung von Gasen eingesetzt werden, gibt es zwei gängige Produktionsmethoden. Zum einen das Blasformen von ganzen Linern, zum anderen die Methode der Herstellung von Segmenten des Behälters im Spritzguss und Extrusionsverfahren sowie eine nachgeschaltete Verbindung dieser Komponenten durch ein Fügeverfahren.

Die hierbei zum Einsatz kommenden Werkstoffe sind zumeist auf Basis von HDPE (High Density Polyethylen) oder Polyamiden.

Ein wichtiges Unterscheidungsmerkmal für Linerwerkstoffe sind die mechanischen Tieftemperatureigenschaften sowie die Emissionseigenschaften. Monolayermaterialien wie Polyamid verfügen über eine gute Sperreigenschaft für Gase, jedoch nicht über optimale Tieftemperatureigenschaften. HDPE hingegen verfügt über keine geeignete Sperrwirkung, jedoch über sehr gute Tieftemperatureigenschaften.

Speziell für Anwendungen im Bereich Wasserstoff kommt aus diesem Grund aktuell hauptsächlich Polyamid zum Einsatz. Jedoch sind dadurch vor allem für Blasformtechnologie Grenzen im Hinblick auf Bauteilgröße gesetzt. Die verfügbaren geeigneten Typen sind auf Grund ihrer aufwändigen Additivierung überdies teuer und problematisch beim Einsatz bei tiefen Temperaturen.

Hochdruckbehälter für Gase unterliegen im Zuge ihres Betriebs (Befüllen, Speichern und Entleeren) großen Temperaturschwankungen. Dies stellt hohe Anforderungen an die Materialien und im Speziellen an den Liner dar.

In Verbindung mit der Leichtbauweise und der Verwendung von Verbundwerkstoffen stellt sich in diesem Zusammenhang die Herausforderung die unterschiedlichen Materialien an der Fügestelle gasdicht miteinander zu verbinden.

Aus der US 2019/170300 A1 ist ein Druckbehälter bekannt, umfassend eine polymere undurchlässige Auskleidung und eine Verstärkungsschicht aus einem Verbundmaterial, die außen um die undurchlässige Auskleidung herum ausgebildet ist; mindestens einem Vorsprung, der mit der undurchlässigen Auskleidung und der Verstärkungsschicht verbunden ist, um eine Öffnung des Druckbehälters bereitzustellen, wobei die undurchlässige Auskleidung mit dem Vorsprung durch eine gemeinsam geformte ringförmige Polymer-Metall-Verbindungszone verbunden ist.

Die JP H10 332085 A und die JP H10 332083 A offenbaren jeweils einen druckbeständigen Behälter mit einer gasundurchlässigen inneren Schale, einer druckbeständigen äußeren Schale, die die innere Schale bedeckt, und einem Mundstück, das an mindestens einem Pol des beide Schalen umfassenden Behälters befestigt ist, wobei die Polschulter der inneren Schale einen zylindrischen Hals aufweist, der entlang der Mittelachse der inneren Schale nach außen vorsteht; und das Ende des vorstehenden zylindrischen Halses rechtwinklig zum zylindrischen Hals nach außen verlängert ist, um einen Verlängerungsabschnitt zu bilden, das Ende des Verlängerungsabschnitts zur Schulter der inneren Schale hin gebogen ist, um das innere untere Ende des Mundstücks einzuschließen.

Das Dokument US 2008/251520 A1 lehrt einen Druckbehälter, umfassend einen Hauptkörper mit einem Verstärkungsabschnitt, der eine rohrförmige Konfiguration aufweist, und einem Auskleidungsabschnitt, der aus Harz besteht und eine innere Umfangsfläche des Verstärkungsabschnitts bedeckt; einen Mündungsring, der einstückig mit dem Hauptkörper ausgebildet ist, um ein Inneres und ein Äußeres des Hauptkörpers miteinander zu verbinden; und ein Ventil, das in den Mündungsring an einer inneren Umfangsseite desselben eingesetzt wird, wobei der Mündungsring einen zylindrischen Nabenteil und einen Flanschteil aufweist, der von einer äußeren Umfangsfläche des Nabenteils nach außen vorsteht; und der Auskleidungsabschnitt einstückig mit dem Mündungsring ausgebildet ist und einen Flanschdichtungsteil, der eine Bodenfläche des Flanschteils bedeckt, und einen Nabendichtungsteil enthält, der kontinuierlich mit dem Flanschdichtungsteil ausgebildet ist, um mindestens einen Teil einer inneren Umfangsfläche des Nabenteils in dessen axialer Richtung zu bedecken, wobei der Nabendichtungsteil einen nabenseitigen Kragenteil enthält, der nach außen vorsteht, und ein Dichtungselement, das aus einem elastischen Körper besteht, in einem Raum zwischen einer inneren Umfangsfläche des Nabendichtungsteils und einer äußeren Umfangsfläche des Ventils angeordnet ist.

### Zusammenfassung der Erfindung

Es ist eine Aufgabe der Erfindung, einen Hochdruckbehältern in dieser Hinsicht zu verbessern und insbesondere einen Hochdruckbehälter anzugeben, der auch in einem Übergangsbereich zu einem Bossteil die Anforderungen an Dichtheit und Permeation für einen Hochdruckbehälter erfüllt und dabei einfach und kostengünstig herstellbar ist.

Die Lösung der Aufgabe erfolgt durch einen Hochdruckbehälter mit den Merkmalen gemäß Anspruch 1.

Der Hochdruckbehälter umfasst einen Zylinder als Mittelteil, wobei der Zylinder aus einem Mehrschichtverbund-Kunststoff besteht der eine Barriereschicht umfasst, wobei der Hochdruckbehälter ferner zumindest eine Halbschale an einem axialen Ende des Zylinders umfasst, wobei die Halbschale aus einem Mehrschichtverbund-Kunststoff besteht der eine Barriereschicht umfasst, wobei die Halbschale ferner ein im Wesentlichen rotationssymmetrisches Einlegeteil, nämlich ein Bossteil, umfasst, wobei das Einlegeteil ein Fußteil an dem, dem Behälterinneren zugewandten Ende des Einlegeteils auf-weist, welches einen größeren Durchmesser aufweist als ein Mittelteil des Einlegeteils, wobei das Fußteil im Wesentlichen einen Hohlkegel oder Hohlzylinder bildet und zumindest eine mit dem Mehrschichtverbund-Kunststoff der Halbschale gefüllte erste Nut oder Vertiefung an einem vertikalen Innenumfang des Fußteils zumindest abschnittsweise umläuft.

Erfindungsgemäß wird als Material für den Liner, sowohl in dem durch den Zylinder gebildeten Mittelteil, als auch in zumindest einem, bevorzugt in beiden axialen Endbereichen des Behälters, ein Mehrschichtverbund verwendet. Derartige Mehrschicht-Kunststoffe können auf einfache Weise mittels Blasformen oder Tiefziehen bzw. Vakuumformen zu einer Halbschale geformt werden. Der Zylinder im Mittelteil kann beispielsweise ebenfalls blasgeformt oder beispielsweise extrudiert sein. Erfindungsgemäß wird ein Bossteil verwendet, das einen Fußteil aufweist mit einem größeren Durchmesser als ein benachbarter Mittelteil des Bossteils.

Das Fußteil bildet somit eine Hinterschneidung, in Bezug auf einen von der Seite des Fußteils bzw. des Behältermittelpunkts her eingebrachten Mehrschicht-Kunststoff des Liners.

Das Fußteil ist im Inneren, im Bereich seiner Längsmittelachse, hohl und bildet daher im Wesentlichen einen Hohlkegel oder einen Hohlzylinder.

An einem Innenumfang dieses Hohlkegels oder Hohlzylinders des Fußteils läuft eine erste Nut oder Vertiefung zumindest abschnittsweise, also beispielsweise in einzelnen Sektoren, um den Innenumfang, vorzugsweise auch um den gesamten Innenumfang des Hohlzylinders oder Hohlkegels. Diese Nut oder Vertiefung ist mit dem Mehrschichtverbund-Kunststoff der Halbschale gefüllt. Eine "Vertiefung" kann ähnlich einer Nut ausgebildet sein, und weist jedenfalls zumindest eine Kante auf, die als Hinterschneidung für den dahinterliegenden Kunststoff wirkt, so dass der Mehrschicht-Kunststoff formschlüssig hinter der Kante im Bereich des Innenumfangs gehalten ist.

Durch den Kunststoff des Mehrschicht-Kunststoff des Liners, der eine Barriereschicht aufweist, wird die Dichtheit im Bereich des Übergangs zwischen Kunststoff-Liner und Bossteil erhöht. Dabei ist der Kunststoff in der, an dem vertikalen Innenumfang angeordneten, ersten Nut oder Vertiefung gut gegen ein Ablösen im Laufe des Betriebs des Hochdruckbehälters geschützt, so dass die gute Dichtungseigenschaft des Behälters besonders dauerhaft ist.

Erfindungsgemäß ist radial innerhalb der ersten Nut, innerhalb des Innenumfangs des Fußteils, eine Hülse angeordnet, wobei der Mehrschichtverbund-Kunststoff der Halbschale durch die Hülse gegen den Innenumfang des Fußteils und in die erste Nut gedrückt wird. Der Kunststoff bleibt somit zuverlässig in der ersten Nut und die Dichtwirkung wird weiter erhöht.

In der ersten Nut ist erfindungsgemäß am Boden der Nut ein zusätzliches Dichtelement angeordnet.

Der Hochdruckbehälter weist somit gute Permeationseigenschaften auch im Bereich des Übergangs zum Bossteil auf. Die Herstellung der Halbschale mit eingebettetem Bossteil und des gesamten Hochdruckbehälters ist dennoch auf kostengünstige Weise möglich, da, wie später näher beschrieben wird, das Einbringen des Kunststoffes trotz Hinterschneidung am Fußteil des Bossteils mittels Blasformen oder Vakuumtiefziehen möglich ist.

Der Mehrschichtverbund-Kunststoff der Halbschale ist bevorzugt axial an beiden Seiten des Fußteils angeordnet. Das üblicherweise metallische Bossteil ist somit in den, die Barriereschicht aufweisenden, Kunststoff eingebettet.

Das Fußteil weist bevorzugt zumindest eine zweite Nut auf, die mit dem Mehrschichtverbund-Kunststoff der Halbschale gefüllt ist, wobei die zweite Nut in der Nähe des Innenumfangs des Fußteils an dem, dem Behälterinneren zugewandten, Boden des Fußteils zumindest abschnittsweise umläuft. Diese Nut dient in erster Linie ebenfalls der Erhöhung der Dichtheit zwischen Liner und Bossteil.

Vorzugsweise weist das Fußteil zumindest eine dritte Nut auf, die mit dem Mehrschichtverbund-Kunststoff der Halbschale gefüllt ist, wobei die dritte Nut an der, der Außenseite des Behälters zugewandten, Deckfläche des Fußteils zumindest abschnittsweise umläuft. Zusätzlich zur Erhöhung der Dichtheit verhindert diese dritte Nut auch ein Ablösen des Kunststoffs vom Bossteil an der Deckfläche des Fußteils.

Bevorzugt wiest das Fußteil zumindest eine vierte Nut auf, die mit dem Mehrschichtverbund-Kunststoff der Halbschale gefüllt ist, wobei die vierte Nut in der Nähe des Außenumfangs des Fußteils an dem, dem Behälterinneren zugewandten, Boden des Fußteils zumindest abschnittsweise umläuft. Auch diese Nut verhindert ein Ablösen des Kunststoffs vom Bossteil.

Die erste Nut und/oder die zweite Nut und/oder die dritte Nut und/oder die vierte Nut kann eine Trapezform aufweisen, die sich zum Boden der Nut hin vergrößert, so dass der Formschluss des Kunststoffs in der Nut verbessert wird.

In jeder der Nuten, bevorzugt in der zweiten Nut, kann am Boden der Nut ein zusätzliches Dichtelement angeordnet sein.

Der Mehrschichtverbund-Kunststoff des Zylinders geht bevorzugt in den Mehrschichtverbund-Kunststoff der Halbschale über. Die Barriereschicht verläuft bevorzugt möglichst kontinuierlich am Übergang zwischen Zylinder und Halbschale.

Der Mehrschichtverbund-Kunststoff der Halbschale, und bevorzugt auch der Mehrschichtverbund-Kunststoff des Zylinders, umfasst vorzugsweise zumindest eine Schicht aus HDPE und eine Barriereschicht, insbesondere EVOH, bevorzugt auch ein Regranulat, also eine Regrindschicht, und/oder eine zweite HDPE Schicht und/oder zumindest eine Haftvermittlerschicht.

Vorzugsweise umfasst der Hochdruckbehälter zwei Halbschalen an den axialen Enden des Zylinders, wobei bevorzugt beide Halbschalen so ausgebildet sind, wie zuvor für die erste Halbschale beschrieben.

Der Zylinder und die beiden Halbschalen sind bevorzugt mit einem Fasermaterial umwickelt, bevorzugt mit einem Verbundwerkstoff umfassend Kohlefasern und/oder Glasfasern und/oder Epoxidharz.

Die Herstellung eines erfindungsgemäßen Hochdruckbehälters kann bevorzugt mit einem Werkzeug erfolgen, mit einer ersten Werkzeughälfte die eine Matrize bildet, und die Schritte umfassen:
- eine vorgeheizte erste Kunststoffplatte wird auf die erste Werkzeughälfte gelegt,
- die erste Kunststoffplatte wird mittels Unterdruck oder Druck an die erste Werkzeughälfte gesaugt oder gepresst,
- hierdurch wird der Kunststoff der ersten Kunststoffplatte bereichsweise hinter einer Hinterschneidung eines Einlegeteils, nämlich des Bossteils, seitlich beabstandet vom Einlegeteil angeordnet, oder das Einlegeteil wird, nach dem Saugen oder Pressen der ersten Kunststoffplatte an die erste Werkzeughälfte, so positioniert, dass Kunststoff der ersten Kunststoffplatte bereichsweise hinter einer Hinterschneidung des Einlegeteils seitlich beabstandet vom Einlegeteil angeordnet ist,
- danach wird mittels eines Schiebers oder eines Unterdrucks oder eines Drucks der Kunststoff der ersten Kunststoffplatte hinter der Hinterschneidung von seitlich beabstandet des Einlegeteils an das Einlegeteil gedrückt oder gesaugt, so dass ein Raum hinter der Hinterschneidung des Einlegeteils mit dem Kunststoff gefüllt wird.

Bevorzugt wird somit das Bossteil als Einlegeteil in das Werkzeug eingelegt und in einem Blas- oder Tiefziehvorgang mit der Kunststoffplatte, insbesondere einem permeationsdichten Mehrschichtverbund, umschlossen, sodass der Kunststoff auch in Bereiche hinter einer Hinterschneidung gelangt. Dazu wird zunächst eine Kunststoffplatte mittels Unterdruck oder Druck an die erste Werkzeughälfte gesaugt oder gepresst. Dabei kann das Einlegeteil bereits so positioniert sein, dass durch das Saugen oder Pressen des Kunststoffs an die erste Werkzeughälfte der Kunststoff der ersten Kunststoffplatte bereichsweise hinter einer Hinterschneidung des Einlegeteils, seitlich beabstandet vom Einlegeteil, angeordnet wird.

Alternativ kann erst nach dem Saugen oder Pressen des Kunststoffs an die erste Werkzeughälfte das Einlegeteil so positioniert werden, dass Kunststoff der ersten Kunststoffplatte hinter der Hinterschneidung seitlich beabstandet vom Einlegeteil angeordnet wird, beispielsweise in dem das Einlegeteil verschoben wird oder das Einlegeteil erst jetzt in die erste Werkzeughälfte eingebracht wird.

Danach wird mittels eines Schiebers oder eines Unterdrucks oder eines Drucks der Kunststoff der ersten Kunststoffplatte von seitlich des Einlegeteils an das Einlegeteil heran gedrückt oder gesaugt, so dass ein Raum hinter der Hinterschneidung des Einlegeteils mit dem zuvor seitlich befindlichen Kunststoff gefüllt wird und ein Formschluss entsteht.

Dadurch gelangt der Kunststoff, trotz einfacher Herstellung mittels Blasformen bzw. Vakuumformen, auch in Bereiche hinter dem Einlegeteil und es ergibt sich eine verbesserte dichtende Wirkung des Kunststoffes, insbesondere Mehrschichtverbundes, zum Einlegeteil, insbesondere zum metallischen Bossteil, hin. Um den Einschluss in den Kunststoff zu erreichen werden Schieber und/oder ein Vakuum bzw. Druckluft verwendet.

"Seitlich beabstandet" bedeutet dabei im Wesentlichen beabstandet von einer Längsmittelachse des Einlegeteils, die bevorzugt auch mit der Längsmittelachse des Druckbehälters zusammen fallen kann. Der Kunststoff kann zunächst im Wesentlichen parallel zur Längsmittelachse des Einlegeteils und bevorzugt auch zur umgebenden Behälterwand verlaufen. Der Kunststoff wird dann im Wesentlichen normal auf die Längsmittelachse des Einlegeteils, insbesondere allseitig radial nach innen, zum Einlegeteil hin, gesaugt, geblasen oder geschoben.

Dass das Saugen oder Drücken des Kunststoffs an das Einlegeteil heran zeitlich nach dem Positionieren des Einlegeteils, so dass der Kunststoff bereichsweise seitlich beabstandet vom Einlegeteil angeordnet ist, erfolgt, kann auch in einem kontinuierlichen Prozess erfolgen, so dass jeweils das Einlegeteil weiter bewegt und positioniert wird und dabei jeweils weiter neu Kunststoff herangesaugt oder gedrückt wird, so dass die Positionierung des Einlegeteils und das Heransaugen oder Drücken des Kunststoffs hinter die Hinterschneidung quasi gleichzeitig erfolgt.

Die so entstehende Halbschale kann in einem weiteren Prozessschritt mit einer zweiten Halbschale oder einem extrudierten oder blasgeformten Mehrschichtzylinder verbunden werden. Dies bildet den Kern und somit die Basis für einen weiteren Wickelprozess, in dem der Behälter seine mechanische Festigkeit durch einen Verbundwerkstoff aus Kohle und/oder Glas und Epoxidharz erhalten kann.

Vorzugsweise umfasst das Werkzeug eine zweite Werkzeughälfte, die einen Stempel bildet, wobei die zweiten Werkzeughälfte auf die erste Werkzeughälfte gefahren wird um die innere Kontur der Halbschale auszubilden. Die zweite Werkzeughälfte kann dazu die Form der ersten Kunststoffplatte im Inneren der Halbschale ausformen. Die zweite Werkzeughälfte kann stattdessen auch mit einer zweiten Kunststoffplatte bestückt sein, die die innere Kontur der Halbschale ausbildet.

Vorzugsweise wird das Einlegeteil, nach dem Saugen oder Pressen der ersten Kunststoffplatte an die erste Werkzeughälfte, in Relation zur ersten Werkzeughälfte angehoben, um das Einlegeteil so zu positionieren, dass Kunststoff der ersten Kunststoffplatte hinter der Hinterschneidung seitlich beabstandet vom Einlegeteil angeordnet wird. Das Anheben kann mit Hilfe einer beweglichen Aufnahme für das Einlegeteil erfolgen. Das Einlegeteil kann dabei behälteraußenseitig an der ersten Kunststoffplatte angeordnet sein und das Anheben kann somit entlang der Längsmittelachse des Einlegeteils und bevorzugt auch entlang der Längsmittelachse des Hochdruckbehälters erfolgen, insbesondere in Richtung zum späteren Zentrum des Behälters hin.

Bevorzugt wird das Einlegeteil nach dem Füllen des Raums hinter der Hinterschneidung des Einlegeteils mit dem Kunststoff wieder abgesenkt, in Relation zur ersten Werkzeughälfte. Besonders bevorzugt erfolgt das Absenken gleichzeitig mit dem Verfahren der zweiten Werkzeughälfte auf die erste Werkzeughälfte.

Gemäß einer anderen Ausführungsform wird das Einlegeteil erst nach dem Saugen oder Pressen der ersten Kunststoffplatte an die erste Werkzeughälfte auf die erste Kunststoffplatte gelegt, um das Einlegeteil so zu positionieren, dass Kunststoff der ersten Kunststoffplatte hinter der Hinterschneidung seitlich beabstandet vom Einlegeteil angeordnet wird. Das Einlegeteil kann somit behälterinnenseitig an der ersten Kunststoffplatte angeordnet sein. Eine zweite Kunststoffplatte kann wiederum behälterinnenseitig des Einlegeteils angeordnet werden.

Der Kunststoff der ersten Kunststoffplatte kann axial hinter dem mit Kunststoff gefüllten Raum hinter der Hinterschneidung, abgeschnitten werden, so dass hinter der Hinterschneidung, insbesondere behälteraußenseitig der Hinterschneidung, kein Kunststoff mehr vorliegt.

Bevorzugt wird eine vorgeheizte zweite Kunststoffplatte auf die zweite Werkzeughälfte gelegt, danach die zweite Kunststoffplatte mittels Unterdruck oder Druck an die zweite Werkzeughälfte gesaugt oder gepresst, und die zweite Werkzeughälfte mit der zweiten Kunststoffplatte auf die erste Werkzeughälfte gefahren, um die innere Kontur der Halbschale auszubilden.

Bevorzugt ist die erste Kunststoffplatte ein Mehrschichtverbund, wobei der Mehrschichtverbund bevorzugt eine Schicht aus HDPE (High Density Polyethylen) und eine Barriereschicht, insbesondere EVOH (EthylenVinylalkohol-Copolymer), umfasst. Besonders bevorzugt umfasst der Mehrschichtverbund auch ein Regrindmaterial bzw. Regranulat und/oder ein oder mehrere Haftvermittlerschichten. HDPE bildet bevorzugt die äußerste Schicht des Mehrschichtverbundes und kann zusätzlich auch die innerste Schicht bilden.

Ein Verfahren zur Herstellung eines Hochdruckbehälters umfasst bevorzugt, dass eine Halbschale hergestellt wird durch ein Verfahren wie zuvor beschrieben, wobei die Halbschale mit einer weiteren Halbschale - die beispielsweise ebenfalls ein Einlegeteil umfassen kann und die auf die selbe zuvor beschriebene Art hergestellt sein kann - oder mit mindestens einem - bevorzugt extrudierten oder blasgeformten - Zylinder und einer Endkappe verbunden wird, um einen geschlossenen Behälter zu bilden.

Der geschlossene Behälter wird vorzugsweise mit einem Fasermaterial umwickelt, bevorzugt mit einem Verbundwerkstoff umfassend Kohlefasern und/oder Glasfasern und/oder Epoxidharz.

### Kurzbeschreibung der Zeichnungen

Die Erfindung wird im Folgenden beispielhaft unter Bezugnahme auf die Zeichnungen beschrieben.
- Fig. 1 - Fig. 6: sind Schnittansichten die Schritte eines Verfahrens zur Herstellung einer Halbschale für einen erfindungsgemäßen Hochdruckbehälter in einer ersten Ausführungsform zeigen.

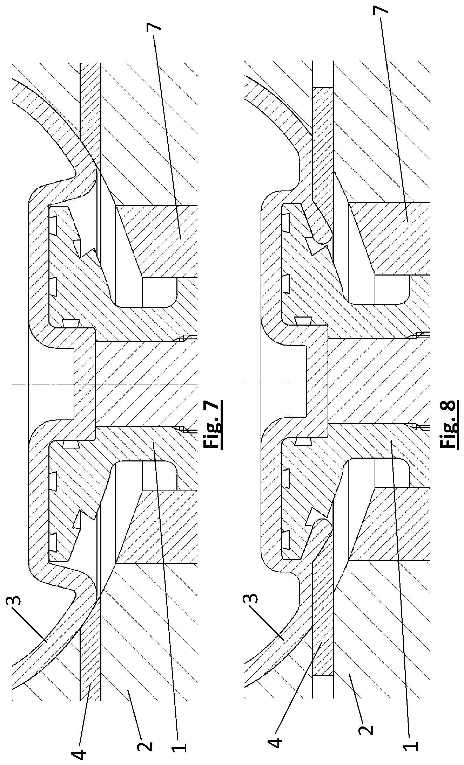

- Fig. 7: ist eine Detaildarstellung der Fig. 3 im Bereich um die Hinterschneidung des Einlegeteils 1.
- Fig. 8: ist eine Detaildarstellung der Fig. 4 im Bereich um die Hinterschneidung des Einlegeteils 1.
- Fig. 9 - Fig. 14: sind Schnittansichten die Schritte eines Verfahrens zur Herstellung einer Halbschale für einen erfindungsgemäßen Hochdruckbehälter in einer zweiten Ausführungsform zeigen.
- Fig. 15: ist eine Schnittansicht eines erfindungsgemäßen Hochdruckbehälters.
- Fig. 16: ist eine Schnittansicht einer Halbschale eines erfindungsgemäßen Hochdruckbehälters.
- Fig. 17: ist eine Schnittansicht einer weiteren Halbschale eines erfindungsgemäßen Hochdruckbehälters.
- Fig. 18: ist eine Schnittansicht einer weiteren Halbschale eines erfindungsgemäßen Hochdruckbehälters.
- Fig. 19: ist eine Schnittansicht des Details A der Halbschale gemäß Fig. 18.

### Detaillierte Beschreibung der Erfindung

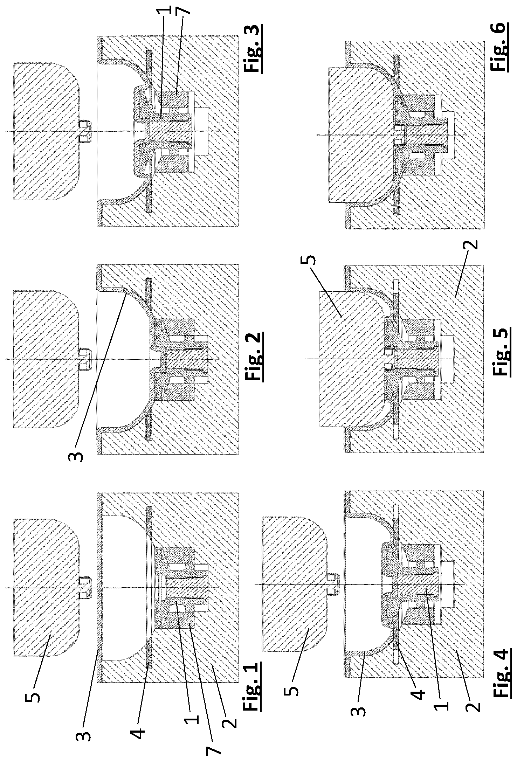

In den Fig. 1-6 ist ein Verfahren zur Herstellung einer Halbschale für einen erfindungsgemäßen Hochdruckbehälter dargestellt.

Es wird ein Werkzeug verwendet mit einer ersten Werkzeughälfte 2, die eine Matrize bildet, und mit einer zweiten Werkzeughälfte 5, die einen Stempel bildet.

Das Werkzeug besteht somit aus zwei Werkzeughälften wobei in der ersten Werkzeughälfte 2, bevorzugt der unteren Werkzeughälfte, das Einlegeteil auf einer beweglichen Aufnahme 7 positioniert wird. Die zweite Werkzeughälfte 5, bevorzugt die obere Werkzeughälfte, fungiert als Stempel, um am Ende des Prozesses eine Verpressung aufzubringen. Zusätzlich kann die zweite Werkzeughälfte 5 auch mit einem zweiten Einlegeteil bestückt werden. Mit Hilfe von im Werkzeug vorgesehenen Schiebern 4 und/oder Vakuum wird der Kunststoff an die für den Formschluss notwendigen Stellen gebracht.

Dazu wird eine vorgeheizte erste Kunststoffplatte 3 auf die erste Werkzeughälfte 2 gelegt und die erste Kunststoffplatte 3 mittels Unterdruck oder Druck an die erste Werkzeughälfte 2 gesaugt oder gepresst. Danach wird das Einlegeteil 1, also das Bossteil, so positioniert, dass Kunststoff der ersten Kunststoffplatte 3 bereichsweise hinter einer Hinterschneidung, seitlich beabstandet vom Einlegeteil 1, angeordnet ist. Alternativ kann auf das Verfahren des Einlegeteils 1 auch verzichtet werden, so dass der Kunststoff gleich auf ein richtig positioniertes Einlegeteil 1, entsprechend Fig. 3, gesaugt wird.

Dann wird mittels eines Schiebers 4 oder eines Unterdrucks oder eines Drucks der Kunststoff der ersten Kunststoffplatte 3 hinter der Hinterschneidung von seitlich beabstandet des Einlegeteils 1 an das Einlegeteil 1 gedrückt oder gesaugt, so dass ein Raum hinter der Hinterschneidung des Einlegeteils 1 mit dem Kunststoff gefüllt wird.

Schließlich wird die zweiten Werkzeughälfte 5 auf die erste Werkzeughälfte 2 gefahren, um die innere Kontur der Halbschale auszubilden.

Das in den Fig. 1 bis 6 dargestellt Singlesheet-Verfahren zeigt im Einzelnen folgende Schritte:
Im ersten Schritt des Singlesheet-Verfahrens (Fig. 1) wird die eine Werkzeughälfte, nämlich die erste Werkzeughälfte 2, mit dem Einlegeteil 1 - nämlich einem Bossteil - und einer vorgeheizten Kunststoffplatte 3 bestückt. Das Einlegeteil 1 befindet sich in der Ausgangsposition.

Optional kann an dieser Stelle auch die zweite Werkzeughälfte 5 mit einem weiteren Einlegteil bestückt werden. Die Kunststoffplatte 3 wird mit Hilfe von Vakuum in die erste Werkzeughälfte 2, welche die äußere Bauteilgeometrie abbildet, eingesaugt.

Um den für den Formschluss notwendigen Raum hinter der Hinterschneidung des Einlegteiles 1 mit Kunststoff zu füllen, ist das Einlegteil 1 in der ersten Werkzeughälfte 2 auf einer beweglichen Aufnahme 7 positioniert. Durch Anheben des Bauteils und den beispielsweise gleichzeitigen Einsatz von Vakuum und/oder Schiebern 4 wird der Raum hinter der Hinterschneidung des Bauteiles gefüllt - Fig. 3 und Fig. 4.

Im nächsten Schritt (Fig. 5) wird die zweite Werkzeughälfte 5 mit einer definierten Schließkraft auf die erste Werkzeughälfte 2 abgesenkt und die innere Kontur des Bauteiles abgebildet. Im Zuge dieses Prozessschrittes kann das Einlegeteil 1 gegebenenfalls wieder in die Ausgangsposition gebracht werden. Dadurch wird der Kunststoff hinter den Hinterschneidungen zusätzlich verpresst und der Formschluss zwischen Einlegeteil 1 und Kunststoff der ersten Kunststoffplatte 3 erhöht.

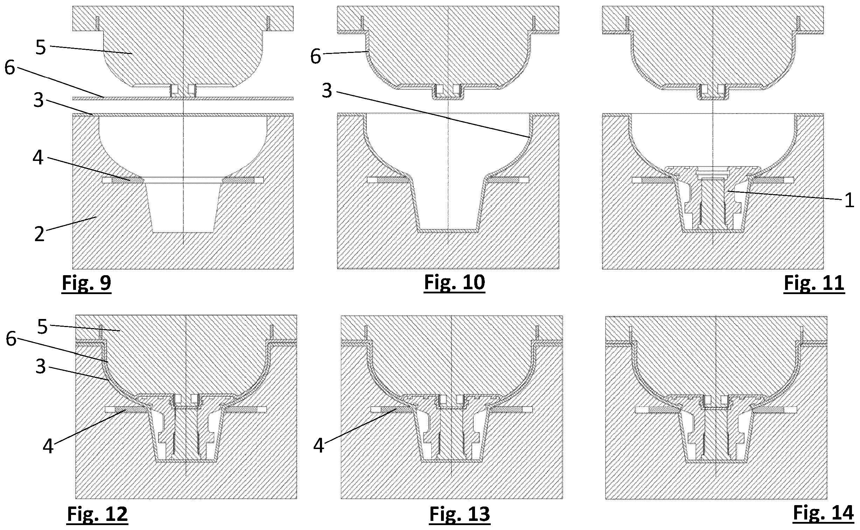

Eine alternative Ausführung des Herstellungsverfahrens zeigen die Fig. 9 bis Fig. 14, nämlich ein Twinsheet-Verfahren zur Herstellung der Halbschale.

Im ersten Schritt des Twinsheet-Verfahrens werden beide Werkzeughälften 2, 5 mit jeweils einer vorgeheizten Kunststoffplatte 3, 6 bestückt (Fig. 9). Optional kann an dieser Stelle auch die zweite Werkzeughälfte 5 mit einem Einlegeteil bestückt werden. Die Kunststoffplatten 3, 6 werden mit Hilfe von Vakuum in bzw. an die jeweiligen Werkzeughälften 2, 5 gesaugt, welche die äußere bzw. innere Bauteilgeometrie abbilden (Fig. 10).

Im nächsten Schritt wird in die erste Werkzeughälfte 2 das zu umschließende Einlegeteil 1 eingelegt (Fig. 11).

Mit Hilfe von Vakuum und/oder Schiebern 4 wird der Raum hinter der für den Formschluss notwendigen Hinterschneidung des Einlegeteiles 1 mit Kunststoff gefüllt (Fig. 12). Das überschüssige Material wird durch in das Werkzeug eingebrachten Schneidkanten hinter der Hinterschneidung abgetrennt (Fig. 13). Diese Schneiden können, wie in Fig. 13, auch in den Schiebern 4 enthalten sein. Fig. 14 zeigt das fertige Bauteil, wobei der überschüssige Kunststoff, unterhalb der Hinterschneidung und der Schieber 4, abgetrennt ist.

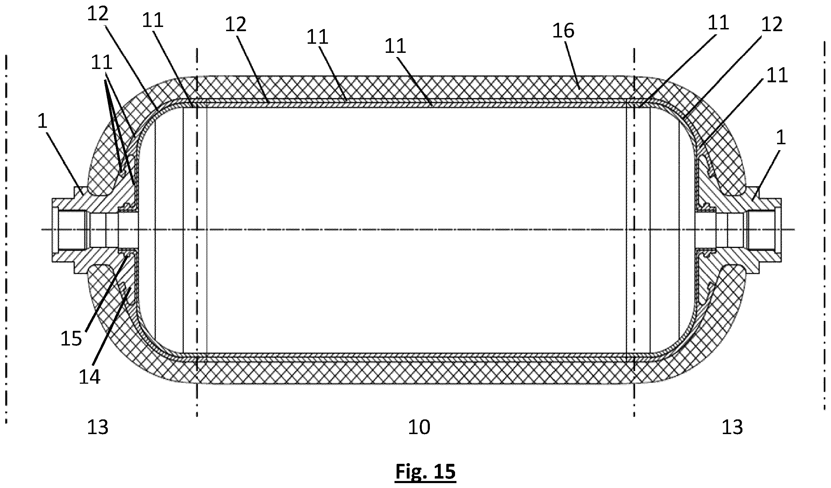

Ein erfindungsgemäßer Hochdruckbehälter ist in Fig. 15 dargestellt. Der Hochdruckbehälter umfasst einen Zylinder 10 als Mittelteil, wobei der Zylinder 10 aus einem Mehrschichtverbund-Kunststoff 11 besteht der eine Barriereschicht 12 umfasst, wobei der Hochdruckbehälter ferner zumindest eine Halbschale 13 an einem axialen Ende des Zylinders 10 umfasst, wobei die Halbschale 13 aus einem Mehrschichtverbund-Kunststoff 11 besteht, der eine Barriereschicht 12 umfasst, wobei die Halbschale 13 ferner ein im wesentlichen rotationssymmetrisches Einlegeteil 1, nämlich ein Bossteil, umfasst, wobei das Einlegeteil 1 eine Hinterschneidung in Bezug auf eine Entformung in Richtung der Längsmittelachse des Einlegeteils 1 umfasst, wobei der Mehrschichtverbund-Kunststoff 11 der Halbschale 13 axial an beiden Seiten der Hinterschneidung des Einlegeteils 1 angeordnet ist.

Die Hinterschneidung wird durch ein Fußteil 14 an dem, dem Behälterinneren zugewandten Ende des Einlegeteils 1, gebildet, welches einen größeren Durchmesser aufweist als ein Mittelteil des Einlegeteils 1. Der Mehrschichtverbund-Kunststoff 11 ist axial an beiden Seiten des Fußteils 14 angeordnet.

Das Fußteil 14 weist mehrere Nuten 15 auf, die mit dem Mehrschichtverbund-Kunststoff 11 der Halbschale 13 gefüllt sind.

Das Einlegeteil 1 weist im Wesentlichen die Form eines Hohlzylinders auf. Das Fußteil 14 weist im Wesentlichen die Form eines Hohlkegels auf.

Eine mit dem Mehrschichtverbund-Kunststoff 11 der Halbschale 13 gefüllte Nut 15 läuft an einem Innenumfang des Fußteils 14 um.

Der Mehrschichtverbund-Kunststoff 11 des Zylinders 10 geht in den Mehrschichtverbund-Kunststoff 11 der Halbschale 13 über.

Der Mehrschichtverbund-Kunststoff 11 der Halbschale 13 sowie auch des Zylinders 10 umfasst eine Schicht aus HDPE als äußerste Schicht und eine Barriereschicht 12 aus EVOH. Das HDPE kann als HDPE-S (Schwarz) vorliegen, danach kann eine Regranulatschicht angeordnet sein, ein Haftvermittler, die EVOH Schicht, optional wieder ein Haftvermittler und optional auch als innerste Schicht wieder eine HDPE Schicht.

Der Hochdruckbehälter umfasst zwei Halbschalen 13 an den axialen Enden des Zylinders 10, wobei beide Halbschalen 13 so ausgebildet sind, wie zuvor beschrieben, also ein Bossteil 1 aufweisen, dass in den Mehrschichtverbund-Kunststoff 11 eingebettet ist.

Der Zylinder 10 und die beiden Halbschalen 13 sind mit einem Fasermaterial 16 umwickelt, bevorzugt mit einem Verbundwerkstoff umfassend Kohlefasern und/oder Glasfasern und/oder Epoxidharz.

Insgesamt wird somit ein Hochddruckbehälter angegeben, der der Speicherung von Gasen unter hohem Druck dienen kann. Dieser ist in Leichtbauweise ausgeführt und besitzt einen mehrteiligen Mehrschicht-Kunststoffliner, bestehend aus zwei Domkappen 13 und einem Zylinder 10, welcher die Gasdichtheit sicherstellt und eine Permeationsbarriere 12 enthält.

In den beiden Domkappen 13 sind Bossteile 1, nämlich ein "Headstock" und ein "Tailstock" integriert.

Die Permeationseigenschaften liefert sowohl in den Domkappen 13 als auch im Zylinderrohr 10 eine im Schichtaufbau des Liners enthaltene Sperrschicht bzw. Barriereschicht 12.

Der Hochdruckbehälter bekommt seine mechanische Festigkeit durch einen faserverstärkten Verbund 16, welcher im Wickelprozess auf den Kunststoffliner aufgebracht und anschließend ausgehärtet wird.

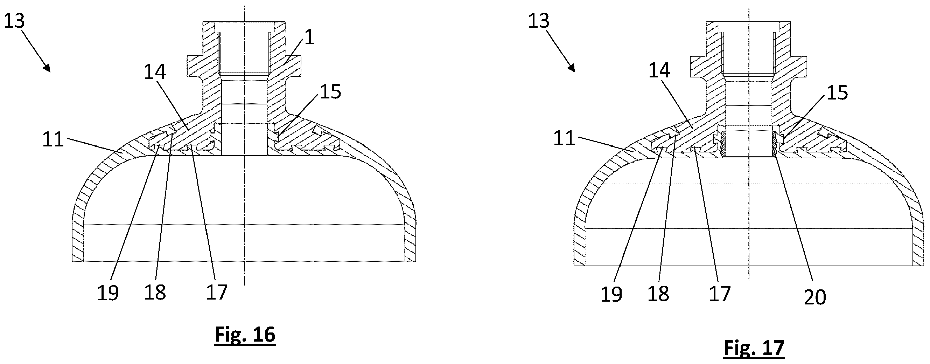

Fig. 16 zeigt eine Halbschale 13 eines erfindungsgemäßen Hochdruckbehälters. Die Halbschale 13 besteht aus einem Mehrschichtverbund-Kunststoff 11, der eine Barriereschicht 12 umfasst, wobei die Halbschale 13 ferner ein im wesentlichen rotationssymmetrisches Einlegeteil 1, nämlich ein Bossteil, umfasst. Das Einlegeteil 1 weist ein Fußteil 14 an dem, dem Behälterinneren zugewandten Ende des Einlegeteils 1 auf, welches einen größeren Durchmesser aufweist als ein Mittelteil des Einlegeteils 1. Das Fußteil 14 bildet im Wesentlichen einen Hohlkegel. Eine mit dem Mehrschichtverbund-Kunststoff 11 der Halbschale 13 gefüllte erste Nut 15 umläuft des Innenumfang des Fußteils 14.

Der Mehrschichtverbund-Kunststoff 11 der Halbschale 13 ist axial an beiden Seiten des Fußteils 14 angeordnet.

Das Fußteil 14 weist eine zweite Nut 17 auf, die mit dem Mehrschichtverbund-Kunststoff 11 der Halbschale 13 gefüllt ist, wobei die zweite Nut 17 in der Nähe des Innenumfangs des Fußteils 14 an dem, dem Behälterinneren zugewandten, Boden des Fußteils 14 umläuft.

Das Fußteil 14 weist eine dritte Nut 18 auf, die mit dem Mehrschichtverbund-Kunststoff 11 der Halbschale 13 gefüllt ist, wobei die dritte Nut 18 an der, der Außenseite des Behälters zugewandten, Deckfläche des Fußteils 14 umläuft.

Das Fußteil 14 weist eine vierte Nut 19 auf, die mit dem Mehrschichtverbund-Kunststoff 11 der Halbschale 13 gefüllt ist, wobei die vierte Nut 19 in der Nähe des Außenumfangs des Fußteils 14 an dem, dem Behälterinneren zugewandten, Boden des Fußteils 14 umläuft.

Wie in Fig. 17 dargestellt, kann radial innerhalb der ersten Nut 15, innerhalb des Innenumfangs des Fußteils 14, eine Hülse 20 angeordnet sein, wobei der Mehrschichtverbund-Kunststoff 11 der Halbschale 13 durch die Hülse 20 gegen den Innenumfang des Fußteils 14 und in die erste Nut 15 gedrückt wird.

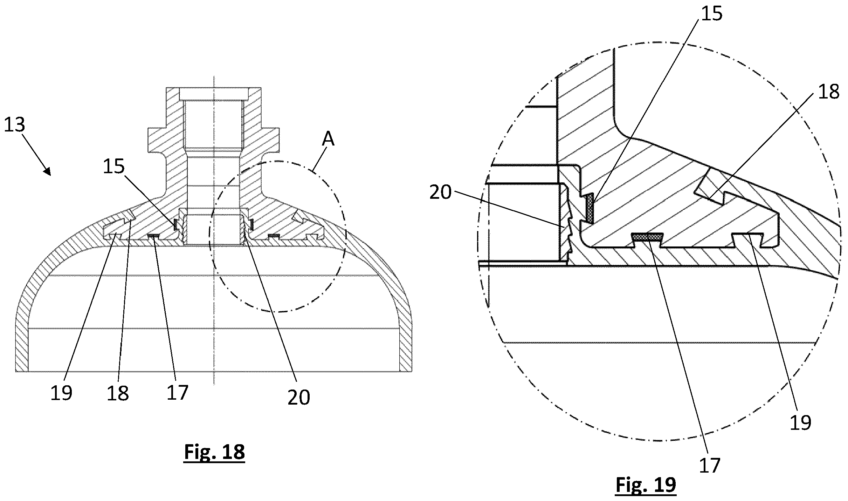

Wie in der Fig. 18 und deren Detailausschnitt des Details A in Fig. 19 zusehen, kann am Boden der Nuten, insbesondere der ersten Nut 15 und der zweiten Nut 17, ein Dichtelement angeordnet sein.

Die primäre Dichtwirkung erfolgt über die Verpressung des Kunststoffes in den ringumlaufende Nuten 15 und 17 am Metallunterteil bzw. in der Kernlochbohrung des Fußteils des Bossteils 1. Zwei weitere Nuten 18, 19 an der Telleraußenseite bzw. Telleroberfläche dienen vor allem dem Formschluss und der Stabilisierung der Kunststoff-Metall Verbindung.

Optional kann im Zuge des Fertigungsprozesses in die Kernlochbohrung eine Hülse 20 eingeschoben werden um die Verpressung auf das dichtende Kunstoffmaterial in der ersten Nut 15 zu erhöhen.

In einer weiteren Option werden die eine oder beide Dichtungsnuten 15, 17 - wie in Fig. 19 dargestellt - mit einem zusätzlichem Dichtelement versehen, um die Dichtwirkung in diesem Bereich zu erhöhen.

### Bezugszeichenliste

- 1: Einlegeteil, Bossteil
- 2: erste Werkzeughälfte
- 3: erste Kunststoffplatte
- 4: Schieber
- 5: zweite Werkzeughälfte
- 6: zweite Kunststoffplatte
- 7: Aufnahme
- 10: Zylinder
- 11: Mehrschichtverbund-Kunststoff
- 12: Barriereschicht
- 13: Halbschale
- 14: Fußteil
- 15: erste Nut
- 16: Fasermaterial

- 17: zweite Nut
- 18: dritte Nut
- 19: vierte Nut
- 20: Hülse

## Patentansprüche

1. Hochdruckbehälter umfassend einen Zylinder (10) als Mittelteil, wobei der Zylinder (10) aus einem Mehrschichtverbund-Kunststoff (11) besteht der eine Barriereschicht (12) umfasst, wobei der Hochdruckbehälter ferner zumindest eine Halbschale (13) an einem axialen Ende des Zylinders (10) umfasst, wobei die Halbschale (13) aus einem Mehrschichtverbund-Kunststoff (11) besteht der eine Barriereschicht (12) umfasst, wobei die Halbschale (13) ferner ein im wesentlichen rotationssymmetrisches Einlegeteil (1), nämlich ein Bossteil, umfasst, wobei das Einlegeteil (1) ein Fußteil (14) an dem, dem Behälterinneren zugewandten Ende des Einlegeteils (1) aufweist, welches einen größeren Durchmesser aufweist als ein Mittelteil des Einlegeteils (1), wobei das Fußteil (14) im Wesentlichen einen Hohlkegel oder Hohlzylinder bildet und zumindest eine mit dem Mehrschichtverbund-Kunststoff (11) der Halbschale (13) gefüllte erste Nut (15) oder Vertiefung an einem vertikalen Innenumfang des Fußteils (14) zumindest abschnittsweise umläuft, **dadurch gekennzeichnet, dass** radial innerhalb der ersten Nut (15), innerhalb des Innenumfangs des Fußteils (14), eine Hülse (20) angeordnet ist, wobei der Mehrschichtverbund-Kunststoff (11) der Halbschale (13) durch die Hülse (20) gegen den Innenumfang des Fußteils (14) und in die erste Nut (15) gedrückt wird, wobei in der ersten Nut (15), am Boden der ersten Nut (15), ein zusätzliches Dichtelement angeordnet ist.

2. Hochdruckbehälter nach Anspruch 1,
**dadurch gekennzeichnet, dass** der Mehrschichtverbund-Kunststoff (11) der Halbschale (13) axial an beiden Seiten des Fußteils (14) angeordnet ist.

3. Hochdruckbehälter nach zumindest einem der vorhergehenden Ansprüche,
**dadurch gekennzeichnet, dass** das Fußteil (14) zumindest eine zweite Nut (17) aufweist, die mit dem Mehrschichtverbund-Kunststoff (11) der Halbschale (13) gefüllt ist, wobei die zweite Nut (17) in der Nähe des Innenumfangs des Fußteils (14) an dem, dem Behälterinneren zugewandten, Boden des Fußteils (14) zumindest abschnittsweise umläuft.

4. Hochdruckbehälter nach zumindest einem der vorhergehenden Ansprüche,
**dadurch gekennzeichnet, dass** das Fußteil (14) zumindest eine dritte Nut (18) aufweist, die mit dem Mehrschichtverbund-Kunststoff (11) der Halbschale (13) gefüllt ist, wobei die dritte Nut (18) an der, der Außenseite des Behälters zugewandten, Deckfläche des Fußteils (14) zumindest abschnittsweise umläuft.

5. Hochdruckbehälter nach zumindest einem der vorhergehenden Ansprüche,
**dadurch gekennzeichnet, dass** das Fußteil (14) zumindest eine vierte Nut (19) aufweist, die mit dem Mehrschichtverbund-Kunststoff (11) der Halbschale (13) gefüllt ist, wobei die vierte Nut (19) in der Nähe des Außenumfangs des Fußteils (14) an dem, dem Behälterinneren zugewandten, Boden des Fußteils (14) zumindest abschnittsweise umläuft.

6. Hochdruckbehälter nach zumindest einem der vorhergehenden Ansprüche,
**dadurch gekennzeichnet, dass** der Mehrschichtverbund-Kunststoff (11) des Zylinders (10) in den Mehrschichtverbund-Kunststoff (11) der Halbschale (13) übergeht.

7. Hochdruckbehälter nach zumindest einem der vorhergehenden Ansprüche,
**dadurch gekennzeichnet, dass** der Mehrschichtverbund-Kunststoff (11) der Halbschale (13) zumindest eine Schicht aus HDPE und eine Barriereschicht (12), insbesondere EVOH, umfasst, bevorzugt auch ein Regranulat und/oder eine zweite HDPE Schicht und/oder zumindest eine Haftvermittlerschicht umfasst.

8. Hochdruckbehälter nach zumindest einem der vorhergehenden Ansprüche,
**dadurch gekennzeichnet, dass** der Hochdruckbehälter zwei Halbschalen (13) an den axialen Enden des Zylinders (10) umfasst, wobei bevorzugt beide Halbschalen (13) so ausgebildet sind, wie in zumindest einem der vorhergehenden Ansprüche beschrieben.

9. Hochdruckbehälter nach zumindest einem der vorhergehenden Ansprüche,
**dadurch gekennzeichnet, dass** der Zylinder (10) und die beiden Halbschalen (13) mit einem Fasermaterial (16) umwickelt sind, bevorzugt mit einem Verbundwerkstoff umfassend Kohlefasern und/oder Glasfasern und/oder Epoxidharz.

## Claims

1. High-pressure vessel comprising a cylinder (10) as middle part, wherein the cylinder (10) is composed of a multilayer composite plastic (11) comprising a barrier layer (12), wherein the high-pressure vessel also comprises at least one half-shell (13) at an axial end of the cylinder (10), wherein the half-shell (13) is composed of a multilayer composite plastic (11) comprising a barrier layer (12), wherein the half-shell (13) also comprises a substantially rotationally symmetrical insert part (1), namely a boss, wherein the insert part (1) has a foot part (14) at that end of the insert part (1) which faces the vessel interior, said foot part having a greater diameter than a middle part of the insert part (1), wherein the foot part (14) substantially forms a hollow cone or hollow cylinder and at least a first groove (15) or recess, filled with the multilayer composite plastic (11) of the half-shell (13), runs around at least in certain portions on a vertical inner circumference of the foot part (14), **characterized in that** a sleeve (20) is arranged radially on the inside in relation to the first groove (15), on the inside in relation to the inner circumference of the foot part (14), wherein the multilayer composite plastic (11) of the half-shell (13) is pushed by the sleeve (20) against the inner circumference of the foot part (14) and into the first groove (15).

2. High-pressure vessel according to Claim 1,
**characterized in that** the multilayer composite plastic (11) of the half-shell (13) is arranged axially on both sides of the foot part (14).

3. High-pressure vessel according to at least one of the preceding claims,
**characterized in that** the foot part (14) has at least a second groove (17) which is filled with the multilayer composite plastic (11) of the half-shell (13), wherein, in the vicinity of the inner circumference of the foot part (14), the second groove (17) runs around at least in certain portions on the base of the foot part (14), said base facing the vessel interior.

4. High-pressure vessel according to at least one of the preceding claims,
**characterized in that** the foot part (14) has at least a third groove (18) which is filled with the multilayer composite plastic (11) of the half-shell (13), wherein the third groove (18) runs around at least in certain portions on the top surface of the foot part (14), said top surface facing the outer side of the vessel.

5. High-pressure vessel according to at least one of the preceding claims,
**characterized in that** the foot part (14) has at least a fourth groove (19) which is filled with the multilayer composite plastic (11) of the half-shell (13), wherein, in the vicinity of the outer circumference of the foot part (14), the fourth groove (19) runs around at least in certain portions on the base of the foot part (14), said base facing the vessel interior.

6. High-pressure vessel according to at least one of the preceding claims,
**characterized in that** the multilayer composite plastic (11) of the cylinder (10) transitions into the multilayer composite plastic (11) of the half-shell (13).

7. High-pressure vessel according to at least one of the preceding claims,
**characterized in that** the multilayer composite plastic (11) of the half-shell (13) comprises at least one layer composed of HDPE and a barrier layer (12), in particular EVOH, and preferably also comprises a regranulate and/or a second HDPE layer and/or at least one adhesion-promoter layer.

8. High-pressure vessel according to at least one of the preceding claims,
**characterized in that** the high-pressure vessel comprises two half-shells (13) at the axial ends of the cylinder (10), wherein the two half-shells (13) are preferably configured as described in at least one of the preceding claims.

9. High-pressure vessel according to at least one of the preceding claims,
**characterized in that** a fibre material (16), preferably a composite material comprising carbon fibres and/or glass fibres and/or epoxy resin, is wound around the cylinder (10) and the two half-shells (13).

## Revendications

1. Réservoir haute pression comprenant un cylindre (10) en tant que partie centrale, le cylindre (10) étant constitué d'une matière plastique composite multicouche (11) qui comprend une couche de barrière (12), le réservoir haute pression comprenant en outre au moins une demi-coque (13) à une extrémité axiale du cylindre (10), la demi-coque (13) étant constituée d'une matière plastique composite multicouche (11) qui comprend une couche de barrière (12), la demi-coque (13) comprenant en outre une pièce d'insertion (1) essentiellement à symétrie de révolution, à savoir une pièce de bossage, la pièce d'insertion (1) présentant une partie de pied (14) à l'extrémité de la pièce d'insertion (1) tournée vers l'intérieur du réservoir, qui présente un diamètre supérieur à une partie centrale de la pièce d'insertion (1), la partie de pied (14) formant essentiellement un cône creux ou un cylindre creux et s'étendant au moins par sections autour d'au moins une première rainure (15) ou cavité remplie de la matière plastique composite multicouche (11) de la demi-coque (13) sur une périphérie intérieure verticale de la partie de pied (14), **caractérisé en ce qu'**une douille (20) est agencée radialement à l'intérieur de la première rainure (15), à l'intérieur de la périphérie intérieure de la partie de pied (14), la matière plastique composite multicouche (11) de la demi-coque (13) étant pressée par la douille (20) contre la périphérie intérieure de la partie de pied (14) et dans la première rainure (15), un élément d'étanchéité supplémentaire étant agencé dans la première rainure (15), au fond de la première rainure (15).

2. Réservoir haute pression selon la revendication 1, **caractérisé en ce que** la matière plastique composite multicouche (11) de la demi-coque (13) est agencée axialement des deux côtés de la partie de pied (14).

3. Réservoir haute pression selon au moins l'une quelconque des revendications précédentes, **caractérisé en ce que** la partie de pied (14) présente au moins une deuxième rainure (17) qui est remplie de la matière plastique composite multicouche (11) de la demi-coque (13), la deuxième rainure (17) s'étendant au moins par sections à proximité de la périphérie intérieure de la partie de pied (14) sur le fond de la partie de pied (14) tourné vers l'intérieur du réservoir.

4. Réservoir haute pression selon au moins l'une quelconque des revendications précédentes, **caractérisé en ce que** la partie de pied (14) présente au moins une troisième rainure (18) qui est remplie de la matière plastique composite multicouche (11) de la demi-coque (13), la troisième rainure (18) s'étendant au moins par sections sur la surface supérieure de la partie de pied (14) tournée vers le côté extérieur du réservoir.

5. Réservoir haute pression selon au moins l'une quelconque des revendications précédentes, **caractérisé en ce que** la partie de pied (14) présente au moins une quatrième rainure (19) qui est remplie de la matière plastique composite multicouche (11) de la demi-coque (13), la quatrième rainure (19) s'étendant au moins par sections à proximité de la périphérie extérieure de la partie de pied (14) sur le fond de la partie de pied (14) tourné vers l'intérieur du réservoir.

6. Réservoir haute pression selon au moins l'une quelconque des revendications précédentes, **caractérisé en ce que** la matière plastique composite multicouche (11) du cylindre (10) se fond dans la matière plastique composite multicouche (11) de la demi-coque (13).

7. Réservoir haute pression selon au moins l'une quelconque des revendications précédentes, **caractérisé en ce que** la matière plastique composite multicouche (11) de la demi-coque (13) comprend au moins une couche d'HDPE et une couche de barrière (12), en particulier d'EVOH, de préférence comprend également un regranulé et/ou une deuxième couche d'HDPE et/ou au moins une couche de promoteur d'adhésion.

8. Réservoir haute pression selon au moins l'une quelconque des revendications précédentes, **caractérisé en ce que** le réservoir haute pression comprend deux demi-coques (13) aux extrémités axiales du cylindre (10), les deux demi-coques (13) étant de préférence réalisées tel que décrit dans au moins l'une quelconque des revendications précédentes.

9. Réservoir haute pression selon au moins l'une quelconque des revendications précédentes, **caractérisé en ce que** le cylindre (10) et les deux demi-coques (13) sont enveloppés d'un matériau fibreux (16), de préférence d'un matériau composite comprenant des fibres de carbone et/ou des fibres de verre et/ou de la résine époxy.
